# EUROPEAN PATENT APPLICATION

(11) **EP 3 694 077 A1**
(43) Date of publication of application: **12.08.2020**
(21) Application number: 20168073.3
(22) Date of filing: 20.11.2015
(51) Int. Cl.: H02J 7/02, H04B 5/00, H02J 50/10, H02J 50/80, H02J 7/00

(54) **A PORTABLE ELECTRONIC DEVICE USING BIDIRECTIONAL WIRELESS POWER TRANSFER FOR THE CHARGING AND DISCHARGING OF A BATTERY**

(30) Priority: 21.11.2014 KR 20140163855
(62) Divisional of application: 15195564.8
(71) Applicant: Samsung Electronics Co., Ltd., Gyeonggi-do 16677 (KR)
(72) Inventor: HA, Min Cheol, 16677 Suwon-si, (KR); PARK, Se Ho, 16677 Suwon-si, (KR); KIM, Ki Hyun, 16677 Suwon-si, (KR); KIM, Ji Hye, 16677 Suwon-si, (KR); SUN, Kum Jong, 16677 Suwon-si, (KR); LEE, Woo Ram, 16677 Suwon-si, (KR)
(74) Representative: HGF

(57) **Abstract**

A signal transmission and reception circuit is provided. The signal transmission and reception circuit includes a coil configured to receive power wirelessly supplied from the outside or output a specific signal wirelessly, a transmission and reception control module including a signal conversion switching circuit that is connected to the coil to rectify the wirelessly supplied power or convert a signal to be output and a driver that controls a switching state of the signal conversion switching circuit, and a filter configured to convert, the signal to be output, into a specific signal.

## Description

### PRIORITY

This application claims priority to Korean patent application filed on November 21, 2014 in the Korean Intellectual Property Office and assigned Serial number 10-2014-0163855, the entire disclosure of which is hereby incorporated by reference.

### BACKGROUND OF THE INVENTION

### 1. Field of the Invention

The present disclosure relates to signal transmission and reception for wireless power transfer (WPT) and wireless communication.

### 2. Background of the Invention

Wireless power transfer (WPT) technology is a technology that converts electrical energy into an electromagnetic wave to deliver energy to a load without a transmission line. As an example, a magnetic induction technique is a technique that delivers power by using a magnetic field induced to a coil. Since the magnetic induction technique enables a current to flow into a transmission coil to generate the magnetic field, an induced current flows into an adjacent reception coil so that it is possible to supply energy to the load. To provide the above-described wireless power transmission, there is a need to dispose various elements.

A magnetic secure transmission (MST) technology is an offline payment technique that uses magnetic communication. The MST technology has an advantage in that it is possible to use the technology without separate additional investment by using a magnetic point of sale (POS) device that is usually used in a retail store. There is a need to dispose various elements for signal transmission in an MST system.

Recently, for user convenience, the WPT and MST technologies as described above are being employed in an electronic device.

However, the disposition of various elements is required for both the WPT technology and the MST technology. However, since a portable electronic device has a limitation in size and seeks a decrease in thickness for the purpose of an aesthetic sense, it is difficult to simultaneously employ the WPT technology and the MST technology. Also, there is a limitation in that, due to the addition of various elements, the price of goods rises.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below. Accordingly, an aspect of the present disclosure is to provide a signal transmitting and receiving circuit that may simultaneously implement a wireless power transfer (WPT) technology and a magnetic secure transmission (MST) technology by the disposition of relatively small elements, and an electronic device including the same, thus leading to a more efficient implementation of WPT and MST in an electronic device.

In accordance with an aspect of the present disclosure, a signal transmission and reception circuit is provided. The signal transmission and reception circuit includes a coil configured to receive power wirelessly supplied from the outside or output a specific signal wirelessly, a transmission and reception control module including a signal conversion switching circuit that is connected to the coil to rectify the wirelessly supplied power or convert a signal to be output and a driver that controls a switching state of the signal conversion switching circuit, and a filter configured to convert the signal to be output into a specific signal.

In accordance with some examples of the present disclosure, the signal transmission and reception circuit further comprises a capacitor connected in parallel to the filter and disposed between (i.e. in series with) the signal conversion switching circuit and the coil.

In accordance with some examples of the present disclosure, a capacitance of the filter is equal to or greater than a capacitance of the capacitor.

In accordance with some examples of the present disclosure, the signal transmission and reception circuit further comprises a first state switch configured to control a connection of the filter and the signal conversion switching circuit corresponding to a specific condition. For example, when MST is desired or selected.

In accordance with some examples of the present disclosure, the first state switch is a turn-off state while the power is received (i.e. the filter is disconnected from the signal conversion switching circuit.

In accordance with some examples of the present disclosure, the coil comprises a first coil configured to output the specific signal; and a second coil configured to receive power wirelessly.

In accordance with some examples of the present disclosure, the signal conversion switching circuit comprises a signal transmission control circuit and a first control circuit configured to control an output of a signal relating to operation of the first coil; and the first control circuit and a second control circuit configured to control transmission and reception of a signal relating to operation of the second coil.

In accordance with some examples of the present disclosure, the signal conversion switching circuit comprises a first control circuit and a second control circuit configured to output a signal relating to operation of the second coil.

In accordance with some examples of the present disclosure, the signal transmission and reception circuit further comprises an inverter comprising a signal transmission switching circuit that uses the first control circuit as a common circuit and switches a signal provided by the transmission control module to deliver the switched signal to the filter.

In accordance with some examples of the present disclosure, the signal transmission switching circuit is configured by connecting a plurality of switches in a cascode structure.

In accordance with some examples of the present disclosure, the transmission and reception control module further comprises at least one of a power processing module configured to deliver the received wireless power to a power control unit or deliver a signal supplied from the power control unit to the signal conversion switching circuit; or a second state switch that is connected to the signal conversion switching circuit to control a state of any one of a wireless power reception function or a wireless power transmission function.

In accordance with another aspect of the present disclosure, an electronic device is provided. The electronic device includes a signal transmission and reception circuit configured to receive power wirelessly supplied from the outside or output a specific signal wirelessly, a power control unit configured to control power supply to the signal transmission and reception circuit, and a control module configured to control power supply from the power control unit and control signal reception or output of the signal transmission and reception circuit, wherein the signal transmission and reception circuit includes a coil performing the power reception and signal output, a transmission and reception control module including a signal conversion switching circuit that is connected to the coil to rectify wirelessly supplied power or convert a signal to be output and a driver that controls a switching state of the signal conversion switching circuit, and a filter configured to convert the signal to be output into the specific signal.

In accordance with some examples of the present disclosure, the electronic device further comprises a battery configured to be charged based on the wirelessly supplied power or provide power used for the signal output.

In accordance with some examples of the present disclosure, the signal transmission and reception circuit further comprises a capacitor connected in parallel to the filter and disposed between the signal conversion switching circuit and the coil, and wherein a capacitance of the capacitor is equal to or less than a capacitance of the filter.

In accordance with some examples of the present disclosure, the signal transmission and reception circuit further comprises a state switch configured to control a selective connection of the filter and the signal conversion switching circuit, and wherein the state switch is a turn-off state while the power is received.

In accordance with some examples of the present disclosure, the coil comprises a first coil configured to output the specific signal; and a second coil configured to receive power wirelessly.

In accordance with some examples of the present disclosure, the signal conversion switching circuit comprises a signal transmission control circuit and a first control circuit configured to control an output of a signal relating to operation of the first coil; and the first control circuit and a second control circuit configured to control transmission and reception of a signal relating to operation of the second coil.

In accordance with some examples of the present disclosure, the signal conversion switching circuit comprises a first control circuit and a second control circuit configured to output a signal relating to operation of the second coil.

In accordance with some examples of the present disclosure, the signal transmission and reception circuit further comprises an inverter comprising a signal transmission switching circuit that uses the first control circuit as a common circuit and switches a signal provided by the transmission control module to deliver the switched signal to the filter.

In accordance with some examples of the present disclosure, the signal transmission switching circuit is configured by connecting a plurality of switches in a cascode structure.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1A is a diagram representing an example of an electronic device according to various embodiments of the present disclosure;
FIG. 1B is a diagram representing an example of a transmission and reception control module according to various embodiments of the present disclosure;
FIG. 2A is a diagram representing an example of a signal transmission and reception circuit according to various embodiments of the present disclosure;
FIG. 2B is a diagram explaining a signal reception state of a signal transmission and reception circuit according to various embodiments of the present disclosure;
FIG. 2C is a diagram explaining a magnetic secure transmission (MST) execution state of a signal transmission and reception circuit according to various embodiments of the present disclosure;
FIG. 3 is a diagram representing an example of a signal transmission and reception circuit according to various embodiments of the present disclosure;
FIG. 4 is a diagram representing another example of an electronic device that uses a single coil according to various embodiments of the present disclosure;
FIG. 5 is a diagram representing an example of a transmission and reception control module that supports operation of a single coil according to various embodiments of the present disclosure;
FIG. 6 is a diagram representing an example of an electronic device that uses a plurality of coils according to various embodiments of the present disclosure;
FIG. 7 is a diagram representing an example of a shape of a plurality of coils according to various embodiments of the present disclosure;
FIG. 8 is a diagram representing an example of a transmission and reception control module that uses a plurality of coils according to various embodiments of the present disclosure;
FIG. 9 is a diagram representing another example of a shape of a plurality of coils according to various embodiments of the present disclosure;
FIG. 10 is a diagram representing an example of an electronic device that has an independent inverter according to various embodiments of the present disclosure; and
FIG. 11 is a diagram representing an example of an independent inverter and transmission and reception control module according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, the expression 'has', 'may have', "comprises", "contains", "includes" or 'may include' indicates the existence of a corresponding characteristic (e.g., numerical value, function, operation or component, such as a part) and does not exclude the existence of additional characteristics.

In the present disclosure, the term "A or B", "at least one of A and/or B", or "one or more of A and/or B" may include all possible combinations of items listed together. For example, the term "A or B", "at least one of A and B", or "at least one of A or B" may indicate all the cases of (1) including at least one A, (2) including at least one B, and (3) including at least one A and at least one B.

The term "first", "second" or the like as used herein may modify various components regardless of order and/or priority, but does not limit the components. Such terms may be used to distinguish one component from another component. For example, "a first user device" and "a second user device" may indicate different user devices regardless of order or priority. For example, without departing the scope of the present disclosure, a first component may be referred to as a second component and vice versa.

It will be understood that when a certain component (e.g., a first component) is referred to as being "operatively or communicatively coupled with/to" or "connected to" another component (e.g., a second component), the certain component may be coupled to the other component directly or via another component (e.g., a third component). However, when a certain component (e.g., a first component) is referred to as being "directly coupled" or "directly connected" to another component (e.g., a second component), there may be no intervening component (e.g., a third component) between the component and the other component.

The term "configured (or set) to" may be interchangeably used with the term, for example, "suitable for", "having the capacity to", "designed to", "adapted to", "made to", or "capable of'. The term "configured (or set) to" may not necessarily have the meaning of "specifically designed to". In some cases, the term "device configured to" may indicate that the device "may perform" together with other devices or components. For example, the term "processor configured (or set) to perform A, B, and C" may represent a dedicated processor (e.g., an embedded processor) for performing a corresponding operation, or a generic-purpose processor (e.g., a central processing unit (CPU) or an application processor) for executing at least one software program stored in a memory device to perform a corresponding operation.

Features, integers, characteristics, compounds, chemical moieties or groups described in conjunction with a particular aspect, embodiment or example of the present disclosure are to be understood to be applicable to any other aspect, embodiment or example described herein unless incompatible therewith.

The terminology used herein is not for delimiting the present disclosure but for describing specific various embodiments. Commonly-used terms defined in a dictionary may be interpreted as having meanings that are the same as or similar to contextual meanings defined in the related art, and should not be interpreted in an idealized or overly formal sense unless otherwise defined explicitly. Depending on cases, even the terms defined herein should not be such interpreted as to exclude various embodiments of the present disclosure.

In the following, electronic devices according to various embodiments of the present disclosure are described with reference to the accompanying drawings. In the present disclosure, the term 'user' may indicate a person who uses an electronic device, or a device (e.g., an artificial-intelligence electronic device) that uses the electronic device.

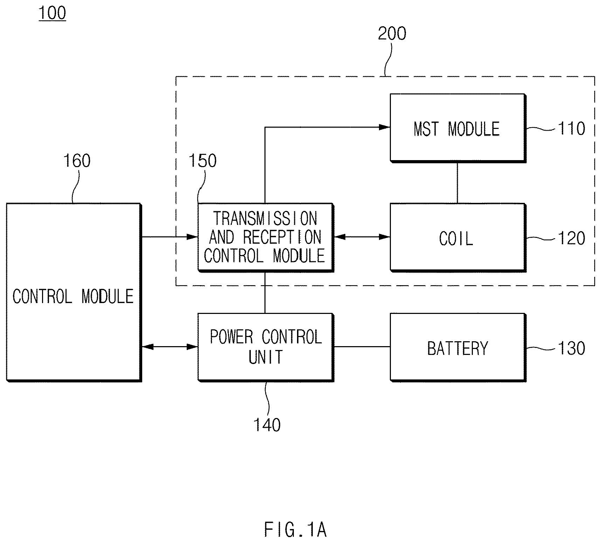

FIG. 1A is a diagram representing an example of an electronic device according to various embodiments of the present disclosure.

Referring to FIG. 1A, an electronic device 100 may include a control module 160, a signal transmission and reception circuit 200, a power control unit 140, and a battery 130. Additionally or alternatively, the electronic device 100 may further include a memory, a display, an input and output module, etc. for supporting various functions that may be provided through the signal transmission and reception circuit 200. According to an embodiment of the present disclosure, the electronic device 100 may store, in the memory, a program relating to supporting a magnetic secure transmission (MST) function that is provided through the signal transmission and reception circuit 200, and output an icon or the like relating to the execution of the MST function to the display. In addition, it is possible to generate an input signal relating to controlling the execution of the MST function, through the input module. Also, the electronic device 100 may store, in the memory, a program for supporting a wireless power reception function or wireless power transmission function that may be performed by the signal transmission and reception circuit 200. As described above, the signal transmission and reception circuit 200 may be a circuit that supports the transmission and reception of a power signal or a signal relating to the execution of the MST function. In addition, the electronic device 100 may provide a user interface relating to the execution of the wireless power reception function or wireless power transmission function, through the display.

The battery 130 may supply power required for the operation of the electronic device 100. The battery 130 may be provided as e.g., a secondary battery to be charged by power supplied by the power control unit 140 and to supply power according to the control of the power control unit 140. According to various embodiments of the present disclosure, the battery 130 may be charged with power wirelessly received through the signal transmission and reception circuit 200 and a coil 120 for transmitting and/or receiving power wirelessly and/or signals for MST. Also, the power from the battery 130 may be transmitted wirelessly through the signal transmission and reception circuit 200 and the coil 120. According to various embodiments of the present disclosure, the electronic device 100 may also support battery charging through wired charging in addition to wireless charging.

The power control unit 140 may be connected to the battery 130 to control the charging or discharging of the battery 130. For example, the power control unit 140 may monitor the charged state of the battery 130 and deliver the monitored value to the control module 160. According to an embodiment of the present disclosure, the power control unit 140 may deliver received power to the battery 130 to charge the battery, when power is received from the outside through the signal transmission and reception circuit 200. The power control unit 140 may deliver power from the battery 130 to the signal transmission and reception circuit 200 according to the control of the control module 160.

The control module 160 may perform signal processing and transmission relating to the operation (or usage) of the function of the electronic device 100. According to an embodiment of the present disclosure, the control module 160 may control at least one of the MST function, the wireless power reception function, and the wireless power transmission function. Regarding this, the control module 160 may provide a menu, an icon, etc. relating to the operation of the above-described functions and control the signal transmission and reception circuit 200 relating to the wireless power transmission function or MST function in response to the selection of the menu or the icon. Alternatively, the control module 160 may control the signal transmission and reception circuit 200 for the execution of the wireless power reception function in response to a user input or external input (e.g., sensing the transmission of wireless power by an external electronic device).

The signal transmission and reception circuit 200 may include devices relating to the execution of the wireless power transfer function (WPT) and MST function of the electronic device 100. The signal transmission and reception circuit 200 may deliver power received from the outside to the power control unit 140 in response to the control of the control module 160 or an external input. Also, the signal transmission and reception circuit 200 may wirelessly transfer the battery 130 power delivered by the power control unit 140 or perform the transmission of a signal relating to the execution of the MST function according to the control of the control module 160. Such a signal transmission and reception circuit 200 may include a transmission and reception control module 150, an MST module 110, and the coil 120.

The MST module 110 may include any of various elements, e.g., a capacitor, a resistor, etc. so that a signal output from the transmission and reception control module 150 is output as a signal of a specific type i.e. a signal having specific characteristics suited to a device intended to receive the signal. For example, the MST module 110 may convert a certain power signal delivered by the transmission and reception control module 150 into a signal having a certain specific size, magnitude, pulse shape or timing to deliver the converted signal to the coil 120 so that a signal of a specific pulse type is output through the coil 120. The MST module 110 may also have a signal transmission state in response to the control of the control module 160 as well as the transmission and reception control module 150.

The coil 120 may be selectively (or conditionally) connected to the MST module 110 and the transmission and reception control module 150. The selectively connected coil 120 may be capable of supporting the MST function and performing WPT. Alternatively, the coil 120 may be provided in plurality to include a coil connected to the MST module 110 and a coil connected to the transmission and reception control module 150. The coils provided in plurality may include a coil that has a physical characteristic for supporting the MST function, and a coil that has a physical characteristic for WPT.

The coil may deliver, to the transmission and reception control module 150, an induced electromotive force induced to a signal transmitted by an external electronic device (e.g., a magnetic signal by a coil of an external electronic device through which a current flows) during the execution of the wireless power reception function. The coil may generate a magnetic signal according to the current delivered by the transmission and reception control module 150 during the execution of the wireless power transmission function. The coil may output a signal delivered through the MST module with the shape or characteristics of a certain pulse during the execution of the MST function.

The transmission and reception control module 150 may be connected to the control module 160 and the power control unit 140 to perform signal conversion during the execution of the wireless power reception function, the wireless power transmission function, and the MST function. For example, the transmission and reception control module 150 may convert an alternating current (AC) signal received from the outside into a direct current (DC) signal during the execution of the wireless power reception function to deliver the converted signal to the power control unit 140. Also, the transmission and reception control module 150 may convert the DC signal transmitted by the power control unit 140 into the AC signal during the execution of the wireless power transmission function to deliver the converted signal to the coil 120. The transmission and reception control module 150 may generate a signal of a certain frequency band, magnitude and/or timing in response to the control of the control module 160 during the execution of the MST function and then deliver the generated signal to the MST module 110.

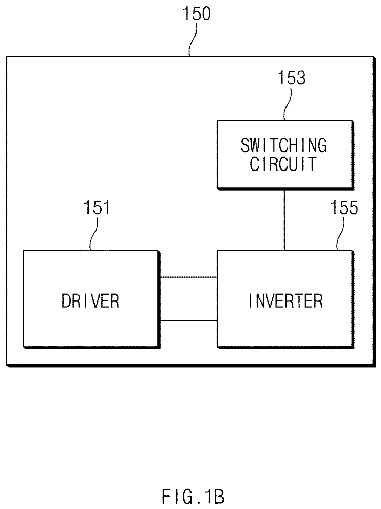

FIG. 1B is a diagram representing an example of a transmission and reception control module according to various embodiments of the present disclosure.

Referring to FIG. 1B, the transmission and reception control module 150 may include a driver 151, a switching circuit 153, and a signal conversion switching circuit (e.g., inverter 155).

The inverter 155 may be configured having a bridge type arrangement of a plurality of switches, e.g., four switches. Such an inverter 155 may be connected to the driver 151 and the switching circuit 153, and additionally to the coil 120 or selectively to the MST module 110. The inverter 155 may convert an AC signal received by the coil 120 into a DC signal. Also, the inverter 155 may convert the DC signal of the power control unit 140 delivered through the switching circuit 153 into the AC signal to deliver the converted signal to the coil 120 or the MST module 110.

The switching circuit 153 may be disposed between the power control unit 140 and the inverter 155 to control the state of the transmission and reception control module 150. For example, the switching circuit 153 may selectively classify a wireless power transmission state and a wireless power reception state. Such a switching circuit 153 may have a certain state according to the control of e.g., the control module 160.

The driver 151 may control the switch state of the switches included in the inverter 155 to control the signal conversion of the inverter 155. For example, the driver 151 may form a path so that the AC signal received from the outside in the case of the wireless power reception state is delivered to the power control unit 140 through the switching circuit 153. Also, the driver 151 may enable a specific signal through the state control of the switches to be delivered to the MST module 110 in the case of the MST function execution state.

According to various embodiments of the present disclosure, the control module 160 may control the switching circuit 153 so that a reception route for the wireless power reception state is formed, when a power signal having a value equal to or greater than a certain size is received from the external electronic device 100. In addition, the control module 160 may deliver a certain control signal to the driver 151 to control the state of the inverter 155 so that the received AC signal is converted into the DC signal.

Also, the control module 160 may control the switching circuit 153 to form a route for executing the wireless power transmission function when there is a user input (e.g., an input relating to the execution of the wireless power transmission function). In addition, the control module 160 may control the inverter 155 to convert DC power of the battery 130 provided by the power control unit 140 into AC power and then control the inverter 155 so that the AC power obtained through the conversion is delivered to the coil 120.

Also, when there is a user input (e.g., an execution of an application relating to the execution of the MST function, an icon selection, or a specific key button selection), the control module 160 may control the switching circuit 153 to form a route having a state in which a signal transmission function is executed. In addition, the control module 160 may control the gate opening and closing timing of the switches of the inverter 155 so that a signal of a certain specific type is delivered to the coil 120 through the MST module 110.

In the case of the wireless power reception state, the control module 160 may receive the current wireless power to control a screen user interface (UI) or audio information output relating to the charged situation of the battery 130. Also, the control module 160 may check the charged state of the battery 130 and output corresponding information. In the wireless power transmission state, the control module 160 may inform of the wireless power that is currently being output, check the charged state of the battery 130 accordingly, and output information relating to the charged state.

As described above, an electronic device according to an embodiment of the present disclosure may include a signal transmission and reception circuit for receiving power wirelessly supplied from the outside or for outputting a specific signal wirelessly, a power control unit for controlling power supply to the signal transmission and reception circuit, and a control module for controlling the power supply of the power control unit and the signal reception or output of the signal transmission and reception circuit, wherein the signal transmission and reception circuit may include a coil for power reception or signal output, a transmission and reception control module including a switching circuit connected to the coil to rectify a wirelessly supplied current or convert a signal to be output and a driver for controlling the switch state of the switching circuit, and a filter for converting the signal to be output into the specific signal.

According to various embodiments of the present disclosure, the electronic device may further include a battery that may be charged by wirelessly supplied power or provides power used for the signal output.

According to various embodiments of the present disclosure, the signal transmission and reception circuit may further include a capacitor connected in parallel to the filter and disposed between the switching circuit and the coil, wherein the capacitor may have a capacitance equal to or lower than a specific size (e.g., 1/50 times or less capacitance) in comparison to the capacitance of the filter.

According to various embodiments of the present disclosure, the signal transmission and reception circuit may further include a state switch controlling the connection of the filter and the switching circuit conditionally or corresponding to a specific condition, wherein the state switch may have a turn-off state during the reception of the power.

According to various embodiments of the present disclosure, the coil may include a first coil for the output of the specific signal and a second coil for the wireless power reception.

According to various embodiments of the present disclosure, the switching circuit may include a signal transmission control circuit and a first control circuit that control the output of a signal relating to the operation of the first coil, and the first control circuit and a second control circuit that control signal transmission and reception relating to the operation of the second coil.

The switching circuit may include a first control circuit and a second control circuit that control a signal output relating to the operation of the second coil.

The signal transmission and reception circuit may further include an inverter including a signal transmission switching circuit that uses the first control circuit as a common circuit and switches a signal provided by the transmission control module to deliver the switched signal to the filter.

The signal transmission switching circuit may be configured by connecting a plurality of switches in a cascode structure.

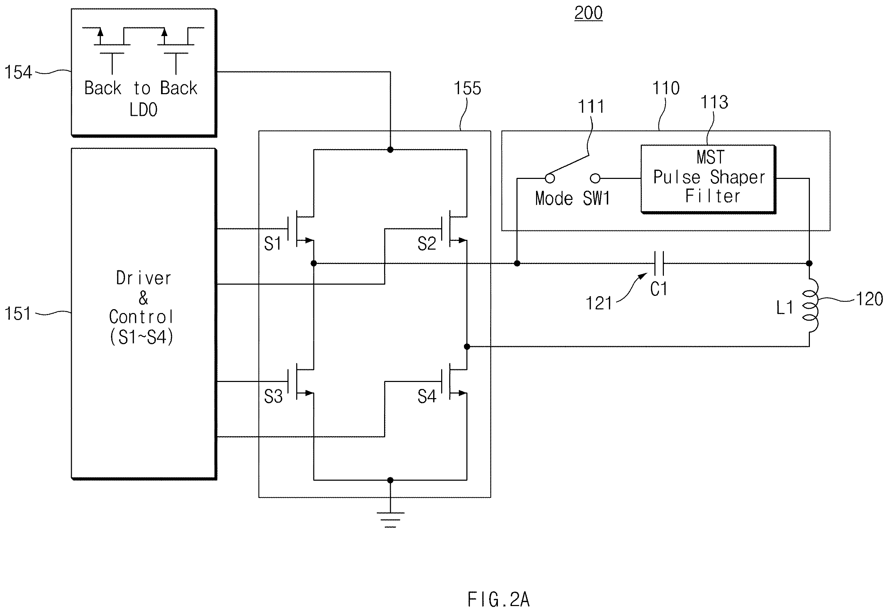

FIG. 2A is a diagram representing an example of a signal transmission and reception circuit according to various embodiments of the present disclosure.

Referring to FIG. 2A, a signal transmission and reception circuit 200 according to an embodiment may include a driver 151, an inverter 155, an MST module 110, a coil 120, a first capacitor 121, and a power processing module 154 (e.g., low drop out (LDO) or buck, booster, etc., referred to hereinafter as "LDO").

The inverter 155 may include e.g., a first switch S1, a second switch S2, a third switch S3, and a fourth switch S4. The first switch S1 and the fourth switch S4 may have the same control state and the second switch S2 and the third switch S3 may also have the same control state. Also, the first switch S1 and the second switch S2 may have different control states. For example, when the first switch S1 and the fourth switch S4 are in the turn-on state, the second switch S2 and the third switch S3 may have the turn-off state. On the contrary, when the first switch S1 and the fourth switch S4 are in the turn-off state, the second switch S2 and the third switch S3 may have the turn-on state. The first to fourth switches S1 to S4 may be configured by using N type metal oxide semiconductor field-effect transistors (MOSFETs).

The MST module 110 may include e.g., a first state switch 111 and an MST pulse shaper filter 113. The first state switch 111 may have a turn-on state while the electronic device 100 receives a request for the execution of the MST function according to the control of a control module 160 or the driver 151. When the MST function is not separately executed, the first state switch 111 may have the turn-off state. The MST module 110 may be disposed in parallel to the first capacitor 121. The coil 120 may be connected in series with the MST module 110. One end of the coil 120 may be connected to the drain of the first switch S1 of the inverter 155 and the other end of the coil may be connected to the source of the fourth switch S4. The first capacitor 121 may be disposed between the coil 120 and the drain of the first switch S1. A capacitor may also be disposed in the MST pulse shaper filter 113. A capacitance of the capacitor included in the MST pulse shaper filter 113 (or a capacitance of the filter 113) may be equal to or greater than (e.g., 50 times) a capacitance of the first capacitor 121.

In the above-described structure, when the first state switch 111 is turned-on, the capacitor of the MST pulse shaper filter 113 has a significantly greater capacitance in comparison to the first capacitor 121 when viewing the coil 120 from the outside, thus the structure may be equivalent to when only the MST module 110 is connected to the coil 120 without being affected by the first capacitor 121. Also, when the first state switch 111 is turned-off, the MST pulse shaper filter 113 may become a floating state relative to the coil 120. In the floating state, the capacitor included in the MST pulse shaper filter 113 may correspond to the substantially removed state. As a result, an AC signal received through the coil 120 may be delivered to the inverter 155 through the first capacitor 121.

The source of the first switch S1 of the inverter 155 and the source of the second switch S2 of the inverter are connected to each other. The drain of the third switch S3 of the inverter and the drain of the fourth switch S4 of the inverter are both connected to the ground. In addition, the source of the first switch S1 and the source of the second switch S2 are connected to a back to back LDO 154. The LDO 154 may process power changed to a DC form through the inverter 155 to enable the power to charge the battery 130, and then deliver the processed power to the power control unit 140.

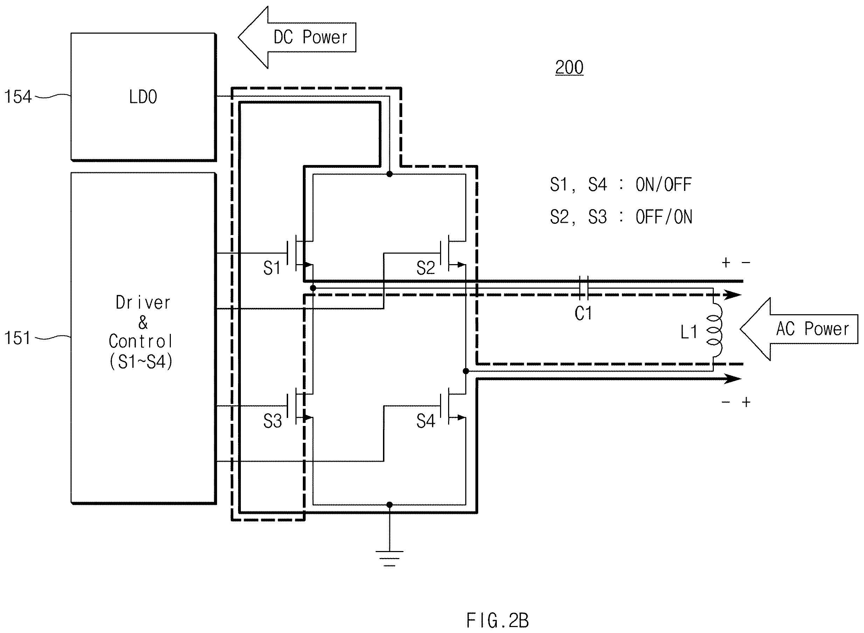

FIG. 2B is a diagram explaining a signal reception state of a signal transmission and reception circuit according to various embodiments of the present disclosure.

Referring to FIG. 2B, when wireless power is received from the outside in the wireless power charging state, in the signal transmission and reception circuit 200, the cathode of an AC signal may be formed at one end of the coil 120 and the anode of the AC signal may be formed at the other end of the coil 120. When it is sensed through a sensor separately provided on the coil 120 that there is a flow of a signal having a value equal to or greater than a certain size, a driver 151 may enable the first switch S1 and the fourth switch S4 to have a turn-on state and the second switch S2 and the third switch S3 to have a turn-off state. Thus, a signal formed in the coil 120 may flow toward the drain of the first switch S1 along a signal line on which the first capacitor 121 is disposed, and may be supplied to the LDO 154 through the first switch S1 in the turn-on state. In this example, the LDO 154 may deliver the supplied signal to the power control unit 140 through DC-DC conversion. A corresponding signal is returned to the coil 120 through the fourth switch S4 grounded in common with the LDO 154, so the 1/2 cycle of the AC signal through the first switch S1 and the fourth switch S4 may be completed.

Since wireless power received from the outside is changed in characteristic according to an AC signal characteristic during the remaining 1/2 cycle, the anode of the AC signal may be formed at one end of the coil 120 and the cathode of the AC signal may be formed at the other end of the coil. The driver 151 may enable the first switch S1 and the fourth switch S4 to have a turn-off state, and the second switch S2 and the third switch S3 to have a turn-on state. Thus, the signal formed in the coil 120 may be delivered to the LDO 154 through the second switch S2 in the turn-on state and may be returned through a signal line on which the first capacitor 121 is disposed, via the third switch S3 connected to a common ground. In the above-described operation, switches included in the inverter 155 may rectify the AC signal to convert the rectified signal into a DC signal and deliver the converted signal to the LDO 154.

Regarding the above-described wireless power reception, the control module 160 may use a sensor disposed on the coil 120 to determine whether the circuit is in the wireless power reception state, as mentioned earlier. Thus, the control module 160 may control the switch state so that the signal transmission and reception circuit 200 may receive power.

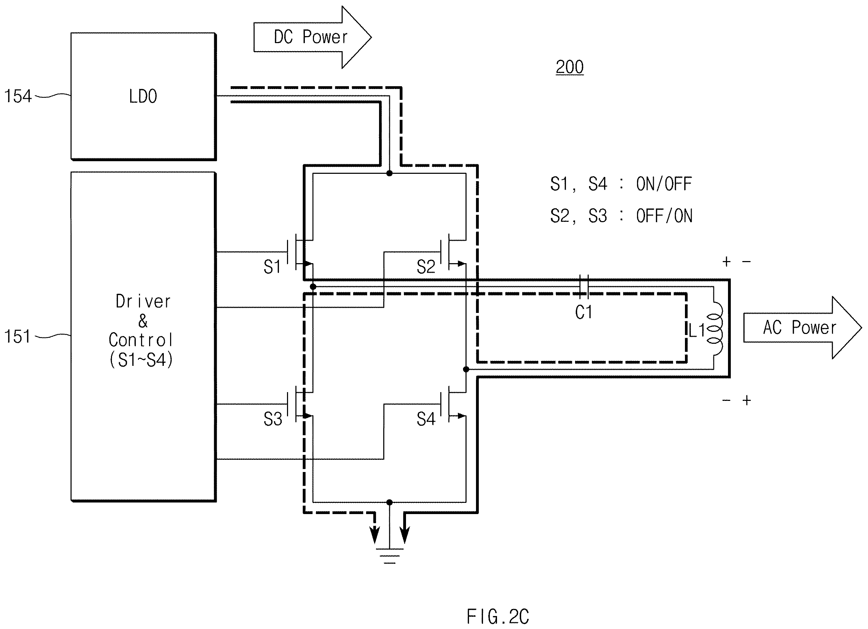

FIG. 2C is a diagram explaining the MST execution state of a signal transmission and reception circuit according to various embodiments of the present disclosure.

Referring to FIG. 2C, in a wireless power transmission state, a signal transmission and reception circuit 200 may receive, through the LDO 154, a signal supplied from the power control unit 140, and deliver the received signal to an inverter 155 to enable the signal to flow toward the coil 120. Regarding this, the driver 151 may enable the first switch S1 and the fourth switch S4 to have a turn-on state, and the second switch S2 and the third switch S3 to have a turn-off state. Thus, a path may be formed which includes the first switch S1 in the turn on state, a signal line including a first capacitor 121, a coil 120, the fourth switch S4, and a ground. A DC signal output through the LDO 154 may be converted into an AC signal via the switches of the inverter 155 and then flow into the coil 120.

When the 1/2 cycle of the AC signal elapses, the driver 151 may enable the first switch S1 and the fourth switch S4 to have a turn-off state, and the second switch S2 and the third switch S3 to have a turn-on state. Thus, the DC signal output through the LDO 154 may be supplied along a path that includes the second switch S2 in the turn-on state, the source of the fourth switch S4, the coil 120, a signal line on which the first capacitor 121 is disposed, the drain of the first switch S1, the third switch S3, and the ground, to supply the AC signal to the coil 120.

Regarding the above-described operation control, the control module 160 may receive an input signal for activating a wireless power transmission function, from an input module or a display having an input function. Alternatively, the control module 160 may activate an application relating to the wireless power transmission function or receive a message requesting the wireless power transmission function from an external electronic device. The control module 160 may control a power control unit 140 so that, according to the generation of a specific signal (e.g., the input signal or message relating to the activation of the above-described wireless power transmission function, or a user input signal), power stored in a battery 130 is supplied to a signal transmission and reception circuit 200, and deliver a control signal to the driver 151 of a transmission and reception control module 150 to control the state of the switches.

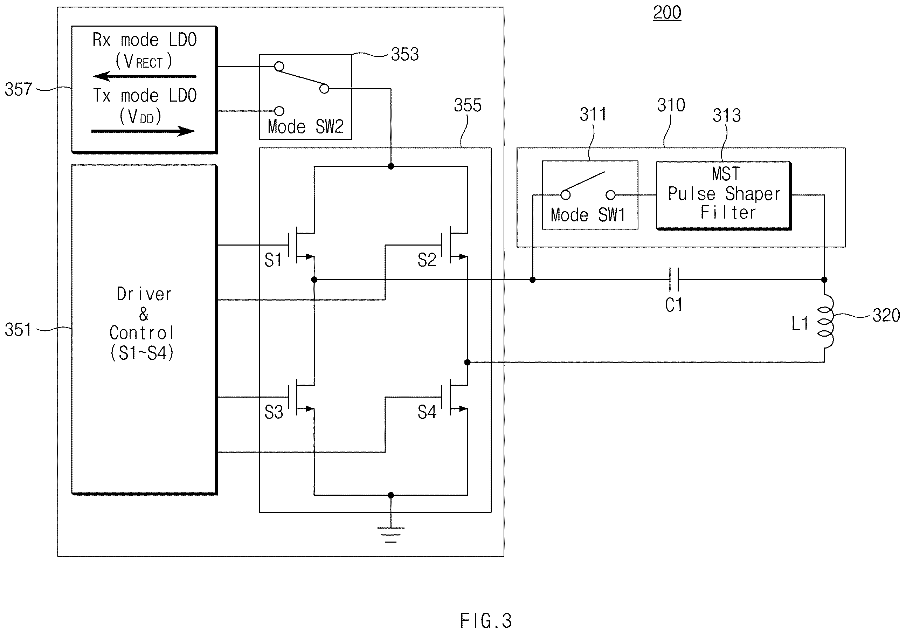

FIG. 3 is a diagram representing another example of a signal transmission and reception circuit according to various embodiments of the present disclosure.

Referring to FIG. 3, a signal transmission and reception circuit 200 according to various embodiments may include a driver 351, an inverter 355, an MST module 310, a coil 320, a first capacitor C1, a first state switch 311, a second state switch 353, and an LDO 357.

In this example, the second state switch 353 is a single pole double throw (SPDT) type switch that may select a reception mode and a transmission mode. When the second state switch 353 operates in the Rx mode, DC power rectified at an NMOS synchronous rectifier may be applied to the LDO 357 so that DC power of a certain magnitude may be generated. When the second state switch 353 operates in the Tx mode, DC power applied from the LDO 357 may be converted into AC power.

In the signal transmission and reception circuit 200, the inverter 355 may include first to fourth switches S1 to S4 configured in a bridge type arrangement, wherein the third switch S3 and the fourth switch S4 may have a common ground state. In addition, the drain of the first switch S1 may be connected to one end of the coil 320 via the first capacitor C1 and the drain of the second switch S2 (or the source of the fourth switch) may be connected to the other end of the coil. The MST module 310 that includes the first state switch 311 and an MST pulse shaper filter 313 may be connected in parallel to the first capacitor C1, and one end of the first capacitor C1 may be connected to one end of the coil. The source of the first switch S1 and the source of the second switch S2 may be connected to one end of the second state switch 353. According to the control of the driver 351 or the control module 160, the selection channel of the second state switch 353 may be differently formed according to a wireless power reception state, a wireless power transmission state, etc. The LDO 357 may be connected to the second state switch 353 to be used for receiving power through the second state switch 353.

The signal transmission and reception circuit 200 having the above-described configuration may include the same configuration as the signal transmission and reception circuit 200 of FIG. 2A as described earlier, except for the second state switch 353. Thus, in the process of executing the wireless power reception function, the second state switch 353 is connected to the Rx mode of the LDO 357 (becomes the Rx mode), so the signal transmission and reception circuit 200 may deliver a received DC signal to a power control unit 140 according to the above-described method in FIG. 2B. Also, in the process of executing the wireless power transmission function, the second state switch 353 is connected to the Tx mode of the LDO 357, so the signal transmission and reception circuit 200 may deliver the DC signal to the coil 320 through an inverter according to the above-described method in FIG. 2B.

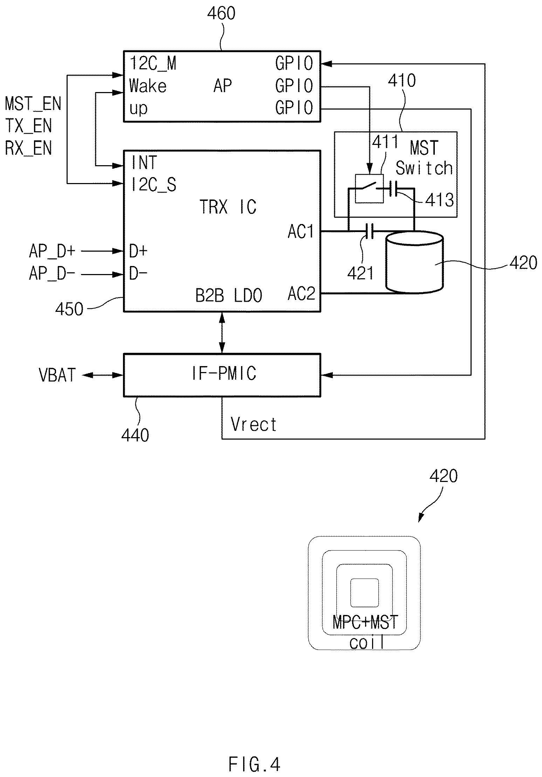

FIG. 4 is a diagram representing another example of an electronic device that uses a single coil according to various embodiments of the present disclosure.

Referring to FIG. 4, an electronic device may include a control module 460, a transmission and reception control module 450, an MST module 410, a first capacitor 421, a coil 420, and a power control unit 440.

The control module 460 may selectively deliver, to the transmission and reception control module 450, at least one of an MST function activation signal MST_EN, a wireless power transmission function activation signal TX EN, and a wireless power reception function activation signal RX_EN. According to an embodiment of the present disclosure, the control module 460 may deliver any one of the above-described activation signals to the transmission and reception control module 450 according to a user input or the function execution of the electronic device 100. Alternatively, the transmission and reception control module 450 may deliver the wireless power reception function activation signal RX EN to the control module 460 according to an external input. The control module 460 may use signal lines connected to the general-purpose input/output (GPIO) port to control a first state switch 411 of the MST module 410 or control the power supply of the power control unit 440.

The above-described control module 460 may receive power supplied from the power control unit 440 through the GPIO port to operate. The control module 460 may deliver control signals AP_D+ and AP D- required for the control of a driver included in the transmission and reception control module 450, to the data ports D+ and D- of the transmission and reception control module 450. In addition, the back to back (B2B) LDO included in the transmission and reception control module 450 may be connected to the power control unit 440. The LDO connected to the power control unit 440 may deliver a power signal received from the outside to the power control unit 440 or output a power signal transmitted by the power control unit 440 toward the coil 420.

The first capacitor 421 may be connected in parallel to the MST module 410, and the coil 420 may be connected to one end of the first capacitor 421 and to one end of the MST module 410. In the electronic device 100 having such a structure, the control module 460 may control the operation of the MST module 410 according to the control of the first state switch 411. For example, when the first state switch 411 is in a turn-on state, the capacitor of an MST pulse shaper filter 413 may be connected to the coil 420. A capacitance of the capacitor of a MST pulse shaper filter 413 with a capacitance of the first capacitor 421 may be equal to or greater than a specific amount or size (e.g., 50 times). Thus, a signal that is output through the B2B LDO and then converted by the switching of an inverter may be converted into a specific pulse signal via the MST pulse shaper filter 413, and the converted signal may be output through the coil 420.

The above-described coil 420 may be capable of using a wireless power reception function, a wireless power transmission function, an MST function, etc. For example, the coil 420 may be used in the same manner while the signal transmission and reception circuit 200 is used as any one of the wireless power reception function, the wireless power transmission function, and the MST function.

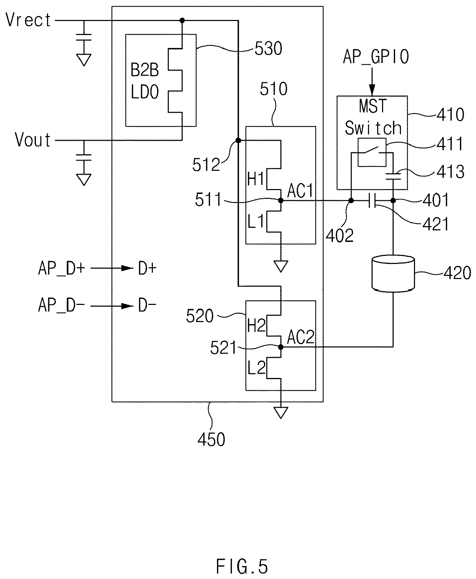

FIG. 5 is a diagram representing an example of a transmission and reception control module that supports an operation of a single coil according to various embodiments of the present disclosure.

Referring to FIG. 5, a signal transmission and reception circuit may include a transmission and reception control module 450, an MST module 410, and a coil 420. The MST module 410 may be connected in parallel to a first capacitor 421 and include a first state switch 411 and a capacitor 413 that are disposed in series. A first node 401 may be disposed between the first capacitor 421 and the coil 420, and a second node 402 may be disposed between the first capacitor 421 and the transmission and reception control module 450.

The transmission and reception control module 450 may include a first control circuit 510, a second control circuit 520, and an LDO 530. Capacitors that function as a stabilizer may be disposed at the output Vrect (e.g., in an aspect of the wireless power reception function) of the LDO 530 and at the input Vout (e.g., in an aspect of the wireless power transmission function) thereof.

The first control circuit 510 may include e.g., a first front switch H1, a second front switch L1, and a first control node 511 that are connected in series, and a second control node 512 connected to the second front switch L1. The first control node 511 may be disposed between the first front switch H1 and the second front switch L1. The second control node 512 may be disposed between the first front switch H1 and the second control circuit 520 or between the first front switch H1 and the LDO 530.

The second control circuit 520 may include a first rear switch H2 and a second rear switch L2 that are connected in series, and a third control node 521. The third control node 521 may be a point between the first rear switch H2 and the second rear switch L2. The third control node 521 may be connected to the other end of the coil 420.

A positive cyclic signal AC1 received through the coil 420 may be delivered to the first control node 511, and may be delivered to the LDO 530 through the first front switch H1 in a turn-on state and the second control node 512. Also, a negative cyclic signal AC2 received through the coil 420 may be delivered to the third control node 521, and may be delivered to the LDO 530 through the first rear switch H2 in a turn-on state and the second control node 512.

In the wireless power reception or wireless power transmission state, the first state switch 411 may have a turn-on state. When the first state switch 411 becomes a turn-on state, a DC signal output through the LDO 530 may be converted into an AC signal through the first control circuit 510 and the second control circuit 520, and a corresponding signal may be supplied to the coil 420 through the first state switch 411 and a capacitor corresponding to an MST pulse shaper filter.

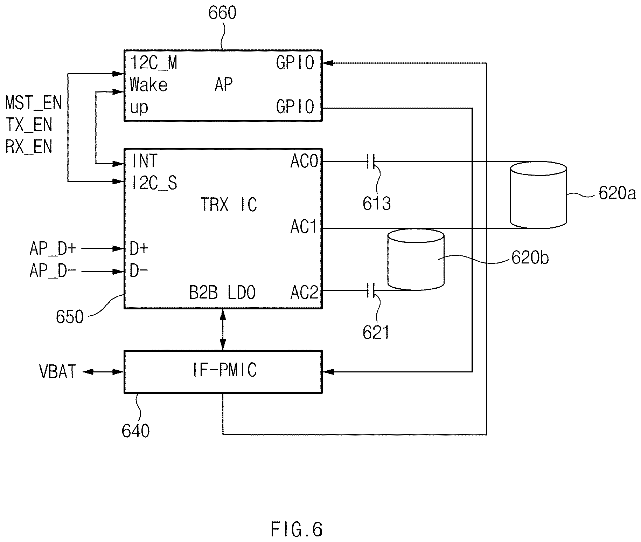

FIG. 6 is a diagram representing an example of an electronic device that uses a plurality of coils according to various embodiments of the present disclosure.

Referring to FIG. 6, an electronic device may include a control module 660, a transmission and reception control module 650, a power control unit 640, a first coil 620a, a second coil 620b, a first capacitor 621, and an MST capacitor 613.

The control module 660 may communicate with the 12C_S of the transmission and reception control module 650 through the port I2C_M so that an MST function activation signal MST EN and a wireless power transmission activation signal TX EN may be transmitted and received. The transmission and control module 650 may wake up the control module 660 through the port INT. If it is sensed from a sensor disposed on the second coil 620b that a signal having a value equal to or greater than a specific size has been generated, the transmission and reception control module 650 may deliver a corresponding sensed signal to the control module 660 through the port INT to wake up the control module 660 in order to process the wireless power reception function. In this operation, a wireless power reception activation signal RX EN may be delivered between the transmission and reception control module 650 and the control module 660.

The transmission and reception control module 650 may be connected to the first coil 620a and the second coil 620b as shown in FIG. 6. One end of the first coil 620a may be connected to the transmission and reception control module 650 through the MST capacitor 613. The first coil 620a may be used while the MST function is executed. One end of the second coil 620b may be connected to the other end of the first coil 620a and the other end of the second coil 620b may be connected to the transmission and reception control module 650 through the first capacitor 621. The transmission and reception control module 650 may control a signal flow required for the operation of the first coil 620a through ports AC0 and AC1, and control a signal flow required for the operation of the second coil 620b through ports AC1 and AC2. The B2B LDO of the transmission and reception control module 650 may be connected to the power control unit 640.

The power control unit 640 may be connected to a battery (e.g., battery 130) and the control module 640 and support power supply required for the wireless power transmission function or MST function according to the control of the control module 640. Also, the power control unit 640 may support the wireless power reception function according to the control of the control module 640.

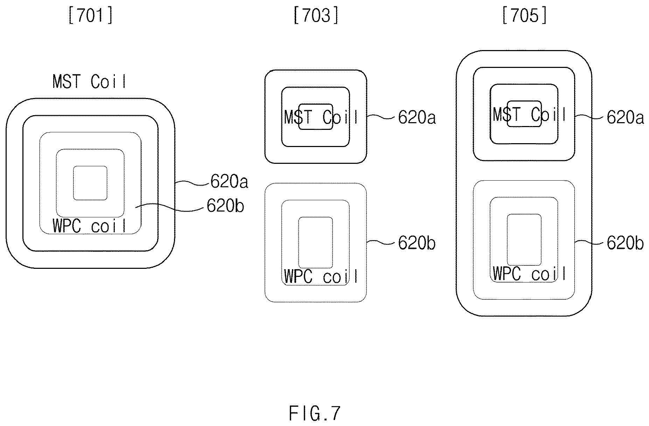

FIG. 7 is a diagram representing an example of a shape of a plurality of coils according to various embodiments of the present disclosure.

Referring to FIG. 7, according to an embodiment of the present disclosure, the first coil 620a and the second coil 620b may be disposed as in state 701. For example, the first coil 620a may be provided in such a manner that at least one closed curve is disposed at a distance equal to or greater than a certain value from the center. The second coil 620b may be disposed at the center of the first coil 620a in such a manner that at least one closed curve is disposed at a distance equal to or less than a certain value from the center. Although in FIG. 7, the first coil 620a and the second coil 620b are disposed in such a manner that two closed curves have a certain interval, various embodiments of the present disclosure are not limited thereto. The number of the closed curves may vary according to a mounting region. Although FIG. 7 shows the first coil 620a and the second coil 620b so that they are not connected, the closed curves may be provided so that they are connected to the ports AC0 to AC2 of the transmission and reception control module 650 in common or to each other.

According to various embodiments of the present disclosure, the first coil 620a and the second coil 620b may be disposed at a certain interval as in state 703. For example, the first coil 620a supporting the MST function may include sub coils that are provided in such a manner that a plurality of closed curves have different intervals from the same central point. The second coil 620b supporting the wireless power transmission and reception function may be provided so that at least one closed curve has different intervals from the central point that is different from the central point of the first coil 620a. The first coil 620a and the second coil 620b may be provided so that there is no overlap region. In this example, one end of the first coil 620a and the other end of the second coil 620b may be connected to port AC1 in common and may be connected to ports AC0 and AC2, respectively.

According to various embodiments of the present disclosure, the first coil 620a and the second coil 620b may be disposed in such a manner that at least one closed curve is disposed at a certain interval from central points that are disposed at different positions as in state 705. In this example, a closed curve that surrounds the first coil 620a and the second coil 620b may be provided. For the first coil 620a and the second coil 620a, the surrounding closed curve may be connected to port AC1 in common and closed curves having different central points may be connected to port AC0 or AC2, respectively.

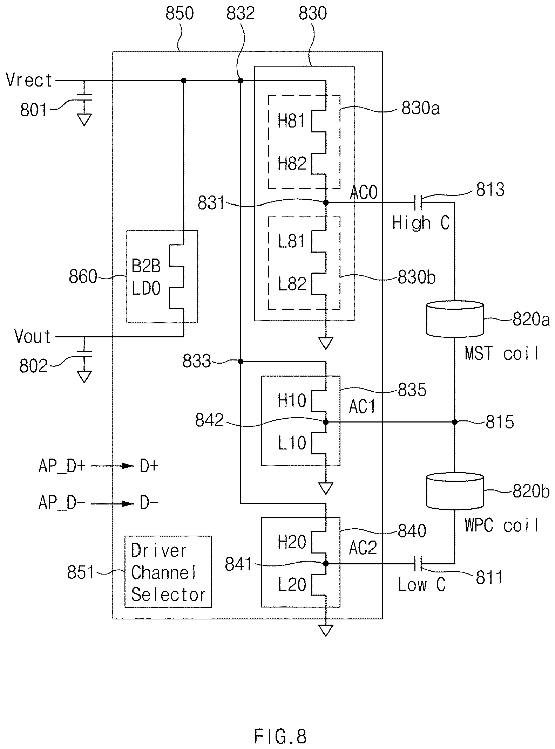

FIG. 8 is a diagram representing an example of a transmission and reception control module that uses a plurality of coils according to various embodiments of the present disclosure.

Referring to FIG. 8, a signal transmission and reception circuit 200 may include a transmission and reception control module 850, a first coil 820a and a second coil 820b that are connected in parallel to the transmission and reception control module 850, an MST capacitor 813 disposed between the first coil 820a and the transmission control module 850, and a first capacitor 811 disposed between the second coil 820b and the transmission and reception control module 850. Also, the signal transmission and reception circuit 200 may include a coil node 815 that is disposed between the first coil 820a and the second coil 820b.

The transmission and reception control module 850 may include a signal transmission control circuit 830, a first control circuit 835, a second control circuit 840, an LDO 860, and a driver 851.

The signal transmission control circuit 830 may include an upper control switch 830a and a lower control switch 830b that are connected in series, and an MST node 831 may be disposed between the upper control switch 830a and the lower control switch 830b. The upper control switch 830a or the lower control switch 830b may be provided in such a manner that a plurality of switches are connected in series to execute a clamping function of an AC signal in order to prevent an overvoltage or overcurrent. For example, the upper control switch 830a may be disposed so that a first upper control switch H81 and a second upper control switch H82 are connected in series. The lower control switch 830b may be disposed so that a first lower control switch L81 and a second lower control switch L82 are connected in series. One end of the lower control switch 830b may be grounded and the upper end of the upper control switch 830a may be connected to an LDO node 832 connected to the LDO 860. The MST node 831 may be connected to the MST capacitor 813. The first control circuit 835 may be used for the first coil 820a. The MST node 831 may correspond to port AC0 as described in FIG. 6.

For the first control circuit 835, a first front switch H10 and a second front switch L10 may be connected in series and a first front node 842 may be disposed between the first front switch H10 and the second front switch L10. The first front node 842 may be connected to the coil 815. The first front node 842 may correspond to port AC1 as described in FIG. 6. The upper end of the first front switch H10 may be connected to a second front node 833 to which the first control circuit 835 is connected. The lower end of the second front switch L10 may be grounded. The above-described first control circuit 835 may be used as a common circuit for the first coil 820a and the second coil 820b. For example, the first control circuit 835 may control a state when the first coil 820a is used and also control a state when the second coil 820b is used.

For the second control circuit 840, a first rear switch H20 and a second rear switch L20 may be connected in series and a rear node 841 may be disposed between the first rear switch H20 and the second rear switch L20. The rear node 841 may be connected to one end of the first capacitor 811. The rear node 841 may correspond to port AC2 as described in FIG. 6. The second control circuit 840 may be used for the second coil 820b.

The LDO 860 of the transmission and reception control module 850 may be provided as a B2B type. A capacitor 801 that functions as a stabilizer may be disposed at one end Vrect of the LDO 860, and a capacitor 802 that functions as a stabilizer may be disposed at the other end Vout of the LDO.

The driver 851 may execute a channel selection function. For example, the driver 851 may control at least some of switches included in the first control circuit 835 and switches included in the second control circuit 840 to enable the wireless power reception function, the wireless power transmission function and the MST function to be used.

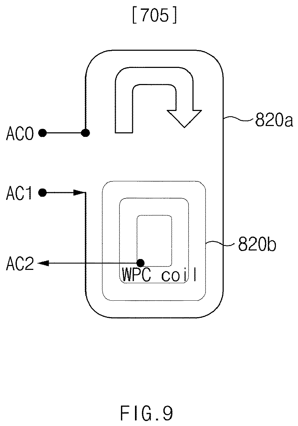

FIG. 9 is a diagram representing another example of a shape of a plurality of coils according to various embodiments of the present disclosure.

Referring to FIG. 9, a first coil 820a has a physical characteristic that may support an MST function and may be provided in the shape of an open curve that has a rim exceeding a certain size as shown in FIG. 9. One end of the first coil 820a may be connected to the port AC0 of a transmission and reception control module 850, and the other end of the first coil 820a may be connected to the port AC1 of the transmission and reception control module. The first coil 820a connected to the ports AC0 and AC1 may receive an MST function related signal that the transmission and reception control module 850 outputs.

A second coil 820b is disposed at a place having a different central point from the first coil 820a and may be provided in the shape of at least one closed curved in the first coil 820a. One end of the second coil 820b may be connected to the port AC1 of the transmission and reception control module 850 and the other end of the second coil may be connected to the port AC2 of the transmission and reception control module 850. The second coil 820b connected to the ports AC1 and AC2 may output a wireless power transmission related signal or receive a signal according to a wireless power reception function.

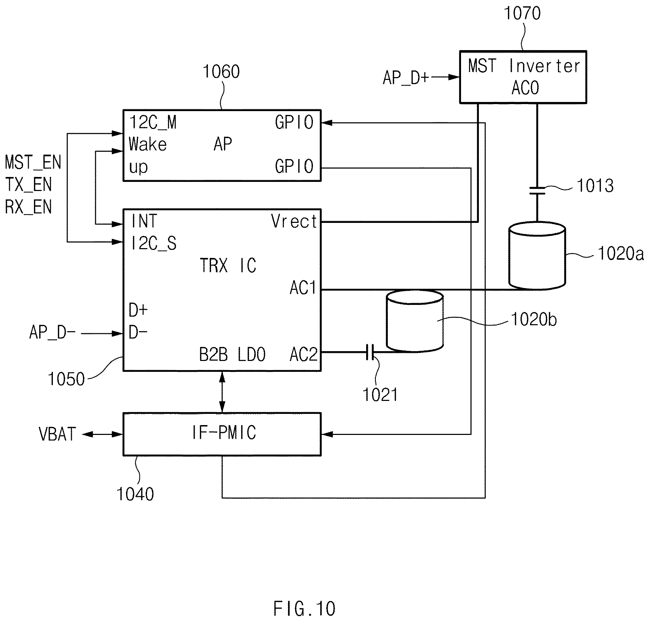

FIG. 10 is a diagram representing an example of an electronic device that has an independent inverter according to various embodiments of the present disclosure.

Referring to FIG. 10, an electronic device may include a control module 1060, a transmission and reception control module 1050, a power control unit 1040, a first coil 1020a, a second coil 1020b, an MST capacitor 1013, a first capacitor 1021, and an MST inverter 1070.

The control module 1060 and the transmission and reception control module 1050 may transmit and receive an MST function activation signal MST_EN, a wireless power transmission activation signal TX EN, a wireless power reception activation signal RX_EN, etc. and perform corresponding control operations. Also, the control module 1060 may receive power from the power control unit 1040 and support the charging or discharging related control of the power control unit 1040.

The transmission and reception control module 1050 may perform signal processing required for the control of the first coil 1020a and the second coil 1020b. Such a transmission and reception control module 1050 may output a signal supplied from the power control unit 1040 in response to the control of the control module 1060 for executing the wireless power transmission function, or receive wireless power input from the outside to deliver the received power to the power control unit 1040. According to an embodiment of the present disclosure, the transmission and reception control module 1050 may deliver a signal relating to the execution of the MST function to the MST inverter 1070. The transmission and reception control module 1050 may include the ports AC1 and AC2 connected to the first coil 1020a and the second coil 1020b and include the port Vrect connected to the MST inverter 1070.

The MST inverter 1070 may include at least one switch relating to the execution of the MST function. The MST inverter 1070 may have a function execution state or turn-off state according to the control of the control module 1060. The MST inverter 1070 may switch a signal delivered by the transmission and reception control module 1050 to deliver the switched signal to the first coil 1020a through an MST pulse shaper filter. In this regard, the MST inverter 1070 may receive a signal from the port Vrect of the transmission and reception control module 1050 and deliver the received signal to the first coil 1020a via the MST capacitor 1013 through the port AC0.

One end of the first coil 1020a may be connected to the port AC0 of the MST inverter 1070 through the MST capacitor 1013 and the other end of the first coil 1020a may be connected to the port AC1 of the transmission and reception control module 1050. The first coil 1020a connected to the ports AC0 and AC1 may have e.g., a characteristic for the operation of the MST function.

One end of the second coil 1020b may be connected to the port AC1 of the transmission and reception control module 1050 in the same way as the first coil 1020a and the other end of the second coil 1020b may be connected to the port AC2 of the transmission and reception control module 1050 via the first capacitor 1021. The second coil 1020b connected to the ports AC1 and AC2 may have a characteristic for the operation of the wireless power transmission function.

The power control unit 1040 may receive power from the transmission and reception control module 1050 to deliver the received power to a battery (e.g., battery 130). Alternatively, the power control unit 1040 may discharge power stored in the battery in response to the control of the control module 1060 to provide power to the transmission and reception control module 1050. Also, the power control unit 1040 may perform power supply relating to the execution of the MST function.

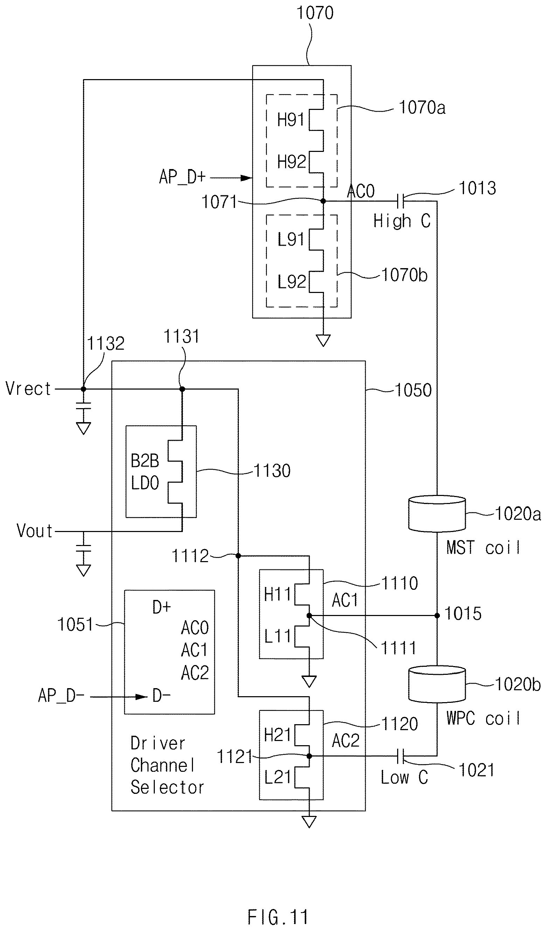

FIG. 11 is a diagram representing an example of an independent inverter and transmission and reception control module according to various embodiments of the present disclosure.

Referring to FIG. 11, a transmission and reception control module 1050 in a transmission and reception circuit may be the same or similar to the structure in FIG. 9 except that an MST inverter 1070 is provided independently.

The independent MST inverter 1070 may include e.g., an upper control switch 1070a and a lower control switch 1070b. The upper control switch 1070a and the lower control switch 1070b may be configured by directly connecting switches in a cascode structure. The upper control switch 1070a may be connected in series with a first upper control switch H91 and a second upper control switch H92, and the lower control switch 1070b may be connected in series with a first lower control switch L91 and a second lower control switch L92. According to various embodiments of the present disclosure, the upper control switch 1070a and the lower control switch 1070b may also be configured as a signal switch. The MST inverter 1070 may include an MST node 1070 that functions as port AC0. The MST node 1071 may be disposed between the upper control switch 1070a and the lower control switch 1070b. The MST node 1071 may be connected to an MST capacitor 1013. The upper end of the MST inverter 1070, e.g., the upper end of the upper control switch 1070a may be connected to a port node 1132 disposed at the port Vrect of the transmission and reception control module 1050 of FIG. 10.

The transmission and reception control module 1050 may include a first control circuit 1110, a second control circuit 1120, an LDO 1130, and a driver 1051.

The first control circuit 1110 may include a first front switch H11, a second front switch L11, and a first front node 1111 between the first front switch H11 and the second front switch L11. The first front node 1111 may function as port AC1. The first front node 1111 may be connected to a coil node 1015 that is disposed between a first coil 1020a and a second coil 1020b. The first control circuit 1110 may be a common circuit that is used in common for the operation of the first coil 1020a and the operation of the second coil 1020b. A second front node 1112 may be disposed at the upper end of the first front switch H11 and the second front node 1112 may be connected to an LDO node 1131 that is provided at one end of the LDO 1130.

The second control circuit 1120 may include a first rear switch H21, a second rear switch L21, and a rear node 1121. The rear node 1121 may function as port AC2. The rear node 1121 may be connected to a first capacitor 1021. A capacitor that functions as a stabilizer may be disposed at the input and output of the transmission and reception control module 1050, e.g., Vrect and Vout.

The above-described coils may be disposed on e.g., the rear surface of an electronic device or the battery cover of the electronic device. When the coil is disposed at the battery cover, an electrical contact is provided at one side of the battery cover and a corresponding electrical contact may be electrically connected to the main PCB of the electronic device corresponding to the installation of the battery cover.

According to various embodiments of the present disclosure, control switches mentioned in the signal transmission and reception circuit 200 may be N type MOSFET switches. Each control switch may be turned on or off according to the control of a driver or a control module 1060 to perform signal conversion (e.g., DC conversion or AC conversion) or delivery.

As described above, according to various embodiments of the present disclosure, an electronic device may include a signal transmission and reception circuit that may support a wireless power transmission function and the signal transmission function of an MST system, a wireless power reception function. For such a signal transmission and reception circuit, an NMOS synchronous rectifier having a wireless power receiver function and an NMOS full bridge inverter having wireless power transmitter and MST transmitter functions may be implemented as the same NMOS transistor, and it is possible to include a single coil (or a plurality of coils) as a transmission and reception coil. Such a signal transmission and reception circuit may operate in a wireless power reception state, in a wireless power transmission state, or in an MST system transmission state by using a state (or mode) switch.

As described above, according to various embodiments of the present disclosure, the signal transmission and reception circuit according to an embodiment may include a coil receiving power wirelessly supplied from the outside or wirelessly outputting a specific signal, a transmission and reception control module including a switching circuit that is connected to the coil to rectify the wirelessly supplied power or convert a signal to be output, and a driver that controls the switching state of the switching circuit; and a filter configured to convert, the signal to be output, into the specific signal.

According to various embodiments of the present disclosure, the transmission and reception control module may further include at least one of an LDO configured to deliver the received wireless power to a power control unit or deliver a signal supplied from the power control unit to the switching circuit, or a second state switch that is connected to the switching circuit to control a state of any one of a wireless power reception function or a wireless power transmission function.

Various embodiments of the present disclosure enhances a user convenience to be achieved by simultaneously implementing a WPT technology and an MST technology.

Also, various embodiments of the present disclosure may minimize and optimize a mounting area by implementing three functions through a simplified circuit.

Also, various embodiments of the present disclosure may provide many functions at a relatively low cost by implementing three functions through a simplified circuit.

The term "module" used herein may represent, for example, a unit including one of hardware, software and firmware or a combination thereof. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific integrated circuit (ASIC) chip, a field-programmable gate array (FPGA), and a programmable-logic device for performing some operations, which are known or will be developed.

At least a part of devices (e.g., modules or functions thereof) or methods (e.g., operations) according to various embodiments of the present disclosure may be implemented as instructions stored in a computer-readable storage medium in the form of a programming module.

The module or program module according to various embodiments of the present disclosure may include at least one of the above-mentioned components, or some components may be omitted or other additional components may be added. Operations performed by the module, the program module or other components according to various embodiments of the present disclosure may be performed in a sequential, parallel, iterative or heuristic way. Furthermore, some operations may be performed in another order or may be omitted, or other operations may be added.

While the present disclosure has been shown and described with reference to various embodiments thereof, it will be understood by those skilled in the art that various changes in form and details may be made therein without departing from the scope of the present disclosure as defined by the appended claims.

Further examples in accordance with the present disclosure are set out in the following numbered clauses.
1. A signal transmission and reception circuit comprising:
   a coil for transmitting and receiving signals;
   a transmission and reception control module comprising a signal conversion switching circuit connected to the coil and configured to rectify power wirelessly received through the coil or to convert a signal to be transmitted through the coil, and a driver configured to control a switching state of the signal conversion switching circuit; and
   a filter configured to convert the signal converted by the signal conversion switching circuit into a specific signal for transmission through the coil.
2. The signal transmission and reception circuit according to clause 1, further comprising a capacitor connected in parallel to the filter and disposed between the signal conversion switching circuit and the coil.
3. The signal transmission and reception circuit according to clause 2, wherein a capacitance of the filter is equal to or greater than a capacitance of the capacitor.
4. The signal transmission and reception circuit according to any preceding clause, further comprising a first state switch configured to control a connection of the filter and the signal conversion switching circuit dependent on a specific condition.
5. The signal transmission and reception circuit according to clause 4, wherein the first state switch is in a turn-off state while the power is wirelessly received.
6. The signal transmission and reception circuit according to any preceding clause, wherein the coil comprises:
   a first coil configured to output the specific signal; and
   a second coil configured to receive power wirelessly.
7. The signal transmission and reception circuit according to clause 6, wherein the signal conversion switching circuit comprises:
   a signal transmission control circuit and a first control circuit configured to control an output of a signal relating to operation of the first coil; and
   the first control circuit and a second control circuit configured to control transmission and reception of a signal relating to operation of the second coil.
8. The signal transmission and reception circuit according to clause 6, wherein the signal conversion switching circuit comprises a first control circuit and a second control circuit configured to output a signal relating to operation of the second coil.
9. The signal transmission and reception circuit according to clause 8, further comprising an inverter comprising a signal transmission switching circuit configured to use the first control circuit as a common circuit and switch a signal provided by the transmission control module to deliver the switched signal to the filter.
10. The signal transmission and reception circuit according to clause 9, wherein the signal transmission switching circuit is configured by connecting a plurality of switches in a cascode structure.
11. The signal transmission and reception circuit according to any preceding clause, wherein the transmission and reception control module further comprises at least one of:
   a power processing module configured to deliver the received wireless power to a power control unit or deliver a signal supplied from the power control unit to the signal conversion switching circuit; or
   a second state switch that is connected to the signal conversion switching circuit to control a state of any one of a wireless power reception function or a wireless power transmission function.
12. An electronic device comprising:
   the signal transmission and reception circuit of any preceding clause;
   a power control unit configured to control power supply to the signal transmission and reception circuit; and
   a control module configured to control power supply from the power control unit and control signal reception or output of the signal transmission and reception circuit.
13. The electronic device according to clause 12, further comprising a battery configured to be charged based on the wirelessly received power or provide power used for the signal to be transmitted through the coil.
14. The electronic device according to clauses 12 or 13, wherein the signal transmission and reception circuit further comprises a capacitor connected in parallel to the filter and disposed between the signal conversion switching circuit and the coil, and wherein a capacitance of the capacitor is equal to or less than a capacitance of the filter.
15. The electronic device according to clause 14, wherein the signal transmission and reception circuit further comprises a state switch configured to control a selective connection of the filter and the signal conversion switching circuit, and wherein the state switch is in a turn-off state while the power is received.

## Claims

1. A portable electronic device (100) comprising:
a display;
a battery (130);
a signal transmission and reception circuit (200) including a coil (120) disposed at a rear side of the portable electronic device (100), and configured to:
rectify power wirelessly received through the coil (120) for charging the battery, and
invert power supplied by the battery (130) for outputting wirelessly through the coil (120);
a power control unit (140) operatively coupled to the battery (130) and the signal transmission and reception circuit (200), and configured to control power to and from the signal transmission and reception circuit (200); and
a controller (160) configured to:
control the power control unit (140) and the signal transmission and reception circuit (200) to rectify power wirelessly received from an external electronic device through the coil (120) and to charge the battery (130) using the rectified power while a wireless power reception function is executed;
control the display to display a user interface for enabling a wireless power transmission function;
receive a user input, via the user interface, for enabling the wireless power transmission function, and
in response to receiving the user input, control the power control unit (140) and the signal transmission and reception circuit (200) to invert power supplied from the battery (130) and transmit the inverted power through the coil (120).

2. The portable electronic device (100) of claim 1, wherein the power control unit (140) is configured to operate in a first state in which power wirelessly received through the coil (120) is used for charging the battery (130), and operate in a second state in which power received via a wired power source is used to charge the battery (130).

3. The portable electronic device (100) of claims 1 or 2, wherein the signal transmission and reception circuit (200) is configured to rectify the power received wirelessly through the coil (120) by converting an alternating current, AC, signal received wirelessly through the coil (120) into a direct current, DC, signal.

4. The portable electronic device (100) of any of claims 1 to 3, wherein the signal transmission and reception circuit (200) is configured to invert the power supplied by the battery (130) by converting a DC signal supplied from the battery (130) into an AC signal.

5. The portable electronic device (100) of any preceding claim, wherein controlling the display to display a user interface for enabling a wireless power transmission function comprises:
outputting, on the display, at least one of a menu or an icon associated with performing the function of the wireless power transmission, and wherein
receiving a user input, via the user interface, for enabling the wireless power transmission function comprises:
receiving a user input selecting at least one of the menu or the icon.

6. The portable electronic device (100) of any preceding claim, further comprising a switch for switching from the wireless power reception function to the wireless power transmission function.

7. The portable electronic device (100) of any preceding claim, wherein the controller (160) is configured to:
control the display to display an indication associated with execution of the wireless power transmission function.

8. The portable electronic device (100) of any preceding claim, wherein the controller (160) is further configured to:
when the wireless power transmission function is executed,
identify a charged state of the battery (130), and
output information corresponding to the charged state of the battery (130).

9. The portable electronic device of claim 8, wherein the outputting information corresponding to the charged state of the battery (130) includes:
outputting the information corresponding to the charged state of the battery (130) on the display, or
outputting an audio signal corresponding to the information corresponding to the charged state of the battery (130).

10. The portable electronic device (100) of any preceding claim, wherein the controller (160) is configured to:
output information indicating that the power supplied by the battery (130) is being output wirelessly during execution of the wireless power transmission function.

11. The portable electronic device (100) of claim 1, wherein the controller (160) is configured to execute the wireless power transmission function in response to receiving a message requesting execution of the wireless power transmission function from an external electronic device.

12. The portable electronic device (100) of any preceding claim, wherein the power supplied by the battery is wirelessly transmitted through the rear side of the portable electronic device (100).

13. The portable electronic device (100) of any preceding claim, wherein the signal transmission and reception circuit (200) includes:
a DC-DC converter configured to supply the power to the battery (130) and to receive the power from the battery (130);
a switch (353) including a wireless power transmission path for outputting power stored in the battery (130) during wireless power transmission, and a wireless power reception path for supplying power to charge the battery (130) during wireless power reception; and
an inverter (355) connected to the switch (353) and the coil (120).

14. The portable electronic device (100) of claim 13, wherein the switch (353) includes a state for transmission of a DC signal received through the inverter (355) to the DC-DC converter during execution of the wireless power reception function, and
wherein the DC-DC converter is configured to perform DC-DC conversion on the received DC signal and transmit the converted DC signal to the battery (130).

15. The portable electronic device (100) of claims 13 or 14, wherein the switch (353) includes a state for transmission of a DC signal received from the battery (130) to the inverter (355) during execution of the wireless power transmission function, and
wherein the inverter (355) is configured to generate an AC signal based on the transmitted DC signal and transmit the generated AC signal to the coil (120).

16. The portable electronic device (100) of claim 1, wherein the signal transmission and reception circuit (200) includes:
a DC-DC converter connected to the battery (130);
a first control circuit (510) connected to the DC-DC converter and one end of the coil (120); and
a second control circuit (520) connected to the DC-DC converter and an opposite end of the coil (120).
